(19) **Europäisches Patentamt**
**European Patent Office**
**Office européen des brevets**

(11) **EP 4 603 348 A1**

(12) **EUROPEAN PATENT APPLICATION**

(43) Date of publication:
**20.08.2025 Bulletin 2025/34**

(21) Application number: **24158261.8**

(22) Date of filing: **19.02.2024**

(51) International Patent Classification (IPC):
**B60T 17/00** (2006.01)     **B01D 53/26** (2006.01)
**F15B 21/00** (2006.01)     **G10K 11/172** (2006.01)

(52) Cooperative Patent Classification (CPC):
**B60T 17/004; B01D 53/26; F15B 21/008;**
**G10K 11/161; G10K 11/172;** F15B 21/048;
F15B 2211/8855

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **MANDAL, Goutam**
**732121 Malda (IN)**
• **RATHOD, Utpal**
**560093 Bangalore (IN)**
• **HUSSAIN, Syed Mushahid**
**560011 Bangalore (IN)**

(74) Representative: **Zacco Sweden AB**
**P.O. Box 5581**
**Löjtnantsgatan 21**
**114 85 Stockholm (SE)**

(54) **AN EXHAUST PORT FOR A PNEUMATIC VALVE OR AN AIR VALVE OF A VEHICLE**

(57) An exhaust port for a pneumatic valve or an air valve of a vehicle. The exhaust port comprises an outer shell. The outer shell comprises a bell mouth shell portion configured to receive air from said pneumatic valve or air valve. The bell mouth shell portion guides the received air from a narrow end towards a wide end thereof. The outer shell also comprises a cylindrical shell portion located adjacent to said wide end, the cylindrical shell portion comprising an open upper end that receives air that has passed through the bell mouth shell portion, and an opposite closed lower end. The exhaust port also comprises a plurality of elongated elements contained within the cylindrical shell portion and extending in an axial direction of the cylindrical shell portion towards, but ending before, the closed lower end, thereby presenting a resonance chamber between the closed lower end and said elongated elements.

FIG. 4

EP 4 603 348 A1

## Description

## TECHNICAL FIELD

The disclosure relates generally to an exhaust port. In particular aspects, the disclosure relates to an exhaust port for a pneumatic valve or an air valve of a vehicle. For example, such a valve may be included in an air drier unit or an air processing unit of a vehicle. The disclosure also relates to a vehicle comprising such an exhaust port. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

Vehicles may be provided with various subsystems in which compressed air is used. For example, compressed air may be used in pneumatic braking system of vehicles. Such pneumatic braking system may include an air drier or air processing unit. A problem with existing systems is the annoying noise level that may be perceived when compressed air is exhausted, such as exhausted from an air dryer, or from some other unit, through an exhaust port. It would thus be desirable to generally improve noise attenuation for compressed air that is exhausted through an exhaust port.

## SUMMARY

According to a first aspect of the disclosure, there is provided exhaust port for a pneumatic valve or an air valve of a vehicle, such as at an air drier or air processing unit of a vehicle, comprising:

- an outer shell, the outer shell comprising

    a bell mouth shell portion configured to receive air from said pneumatic valve or air valve, the bell mouth shell portion having a narrow end and a wide end, wherein the bell mouth shell portion guides the received air from the narrow end towards the wide end,
    a cylindrical shell portion located adjacent to the wide end of the bell mouth shell portion, the cylindrical shell portion comprising an open upper end configured to receive air that has passed through the bell mouth shell portion, and an opposite closed lower end,

- a plurality of elongated elements contained within the cylindrical shell portion and extending in an axial direction of the cylindrical shell portion towards, but ending before, the closed lower end, thereby presenting a resonance chamber between the closed lower end and said elongated elements.

The first aspect of the disclosure may seek to reduce the level of noise that may be present when compressed air exits an exhaust port. A technical benefit may include that by this configuration of the exhaust port, pressure fluctuations may be reduced. In particular, by providing a bell mouth shell portion, a sudden expansion of the compressed air can be avoided, and thus turbulence and noise creation can be reduced. Similarly, the plurality of elongated elements contributes in making any turbulent flow into a more laminar flow. Thus, the elongated elements may reduce further reduce pressure fluctuations and make the flow into a more streamline flow, hereby contributing to the noise reduction. Also, the resonance chamber of the exhaust port will generate destructive noise (reflection) in interference and will act to cancel/-reduce the noise level.

In this disclosure, the terms upper and lower are used for describing spatial relations between different parts, portions, etc. of the exhaust port. For instance, as explained above, the cylindrical shell portion comprises an open upper end configured to receive air that has passed through the bell mouth shell portion, and an opposite closed lower end. Thus, the upper end is considered to be located above the lower end. Conversely, the lower end is considered to be located downwardly of the upper end. Analogously, the bell mouth shell portion is considered to be located above the cylindrical shell portion. It should thus be understood that a general direction from the open upper end towards the opposite closed lower end is considered to represent a downwards direction. Analogously, a general direction from the bell mouth shell portion towards the cylindrical shell portion is also considered to represent a downwards direction, i.e. the cylindrical shell portion is considered to be located downwardly of the bell mouth shell portion. Furthermore, the exhaust port may suitably be configured to be installed such that the downwards direction substantially coincides with the normal to the ground on which the vehicle travels.

Optionally in some examples, including in at least one preferred example, said plurality of elongated elements may be in the form of a plurality of perforated tubes. A technical benefit may include. A technical benefit may include that the perforated tubes may allow soundwaves propagating within the tubes to exit the tubes and cancelling/counteracting each other. Hereby, the noise reducing effect may be further improved. Thus, the perforated tubes may have dual noise reducing effect. Firstly, they may provide a straightening effect on turbulent compressed air to travel externally along the tubes, making the flow more laminar. Secondly, the perforations in the tubes will the soundwaves to exit and interfere with each other around the tubes.

Optionally in some examples, including in at least one preferred example, each perforated tube may have:

- an upper section located nearest the open upper end of the cylindrical shell portion, and
- a lower section located nearest the closed lower end of the cylindrical shell portion, wherein the lower section is provided with perforations allowing air that has entered through the upper section to exit through the perforations in the lower section. A technical benefit may include, analogously to what has been mentioned above, that soundwaves propagating internally of the tubes may exit through the perforations in the lower section and thereby interfere with each other.

Optionally in some examples, including in at least one preferred example, the upper section may be void of perforations. A technical benefit may include that this allows incoming turbulent flow to assume a more laminar flow before the soundwaves are allowed to interact with each other. Thus, pressure fluctuations are allowed to become reduced before sound interference control is provided.

Optionally in some examples, including in at least one preferred example, the upper sections of said plurality of perforated tubes present an array in the form of a honeycomb chamber. A technical benefit may include that the solid portion of the tube, acting as honeycomb chamber, may reduce further pressure fluctuation and make the flow into a more streamline flow.

Optionally in some examples, including in at least one preferred example, the exhaust port may further comprise an upper plate and a lower plate, each plate being provided with a plurality of holes and at least one of the plates being attached to the cylindrical shell portion, wherein each tube extends from a respective hole of the upper plate to a respective hole of the lower plate. A technical benefit may include that attaching tubes between an upper plate and a lower plate provides an easily handled assembly. The assembly including the two plates and the tubes extending therebetween, may be provided as an insert which is mounted into the outer shell. For instance, the assembly may be inserted into the cylindrical shell portion before the bell mouth shell portion is connected to the cylindrical shell portion to form the outer shell.

Suitably, in some examples, including in at least one preferred example, at least one of the plates may be attached to a circumferential wall of the cylindrical shell portion. For instance, the circumferential wall may be provided with at least one circular groove into which the plate may be guided and circumferentially supported. Suitably, there may be one circular groove for each one of the upper and lower plates.

Optionally in some examples, including in at least one preferred example, the cylindrical shell portion is defined by a circumferential wall extending from the open upper end to the closed lower end, wherein the circumferential wall is provided with downwardly inclined perforations for expelling air downwardly to the environment. A technical benefit may include that because of the downwardly inclined perforations, the path of the soundwave becomes longer before reaching a pedestrian or a passenger. As the perforations are inclined downwards, noise exiting the exhaust port can be directed downwardly towards the ground on which the vehicle travels, on which it bounces. Thus, the noise will in such case travel a longer distance before reaching pedestrians and/or passengers, who will thus perceive a lower noise level.

Optionally in some examples, including in at least one preferred example, the direction of extension of the downwardly inclined perforations, and thus the expelling direction, may present an angle in the range of 30°-45° relative to the circumferential wall. A technical benefit may include that, when the exhaust port is correctly mounted as intended, so that the circumferential wall extends substantially vertically/perpendicularly relative to the ground, an angle of 30°-45° will provide a good noise reduction because of the distance the noise will travel before reaching pedestrians and/or passengers.

Optionally in some examples, including in at least one preferred example, the circumferential wall may have:

- an upper area bordering to the bell mouth shell portion, and
- a lower area spaced from the bell mouth shell portion,

wherein the lower area is provided with said downwardly inclined perforations of the circumferential wall. Since there are often provided many other components in the vicinity of upper portions of exhaust ports, a technical benefit may include that by not providing inclined perforations in the upper area, but only in the lower area, the risk of impacting such other components may be reduced. Furthermore, in examples in which the exhaust port comprises perforated tubes in which the perforations are located in the lower section of the tubes, it will be more effective to correspondingly provide the downwardly inclined perforations in the lower area of the circumferential wall for expelling the air.

It should be noted that the cylindrical shell portion does not necessarily need to have a constant diameter. For example, the diameter of the circumferential wall at the upper area may be different from the diameter of the circumferential wall at the lower area. For instance, the external diameter of the circumferential wall at the upper area may be smaller than the external diameter of the circumferential wall at the lower area. The circumferential wall at the lower area may, for example, be made somewhat thicker for providing more elongated inclined perforations which will act as directional guides for the air exiting the exhaust port.

According to a second aspect of the disclosure, there is provided a vehicle comprising the exhaust port according to the first aspect (including any example thereof). The second aspect of the disclosure may seek to solve the corresponding problem and provide corresponding technical effects as discussed above in relation to the first aspect (including any example thereof).

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

## BRIEF DESCRIPTION OF THE DRAWINGS

Examples are described in more detail below with reference to the appended drawings.

FIG. 1 illustrates schematically a vehicle according to at least one example of the disclosure.

FIG. 2 illustrates an exhaust port in a perspective view, in accordance with one example of this disclosure.

FIG. 3 illustrates the exhaust port of FIG. 2 in a side view.

FIG. 4 illustrates the exhaust port of FIG. 2 in a cross-sectional view.

FIG. 5 illustrates the exhaust port of FIG. 2 in another cross-sectional view.

FIG. 6 illustrates the exhaust port of FIG. 2 in yet another cross-sectional view.

FIG. 7 illustrates the exhaust port of FIG. 2 in a top view.

FIG. 8 illustrates the exhaust port of FIG. 2 in an exploded view, and partly in cross-section.

FIG. 9 illustrates very schematically another example of an exhaust port of this disclosure.

## DETAILED DESCRIPTION

The detailed description set forth below provides information and examples of the disclosed technology with sufficient detail to enable those skilled in the art to practice the disclosure.

Compressed air evacuated from exhaust ports of vehicles may present undesired noise. The present disclosure teaches an improved exhaust port which provides a good noise reduction. In particular, by combining a transformation of turbulent compressed air into a more laminar flow with resonance control, the compressed air exiting the exhaust port will present a much lower noise, if any. The exhaust port combines a bell mouth entry in a first shell portion and an array of elongate laminar flow inducing elements in an adjacent second shell portion, which second shell portion also presents a resonance chamber after the elongate laminar flow inducing elements.

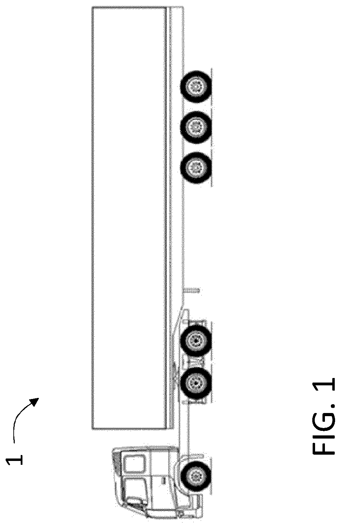

FIG. 1 illustrates schematically a vehicle 1 according to at least one example of the disclosure. In this example, the vehicle 1 is in the form of a heavy-duty vehicle, more particularly, in the form of a tractor unit which is pulling a trailer unit. The vehicle 1 may be provided with an exhaust port of this disclosure. Although a specific vehicle combination has been illustrated, it should be understood that the teachings of the present disclosure may also be implemented in other types of vehicles, such as busses, construction equipment, etc. The illustrated vehicle 1 comprises a cabin in which a driver may operate the vehicle. However, it should be understood that the teachings in this disclosure may also be implemented in an autonomous (self-driving) vehicle.

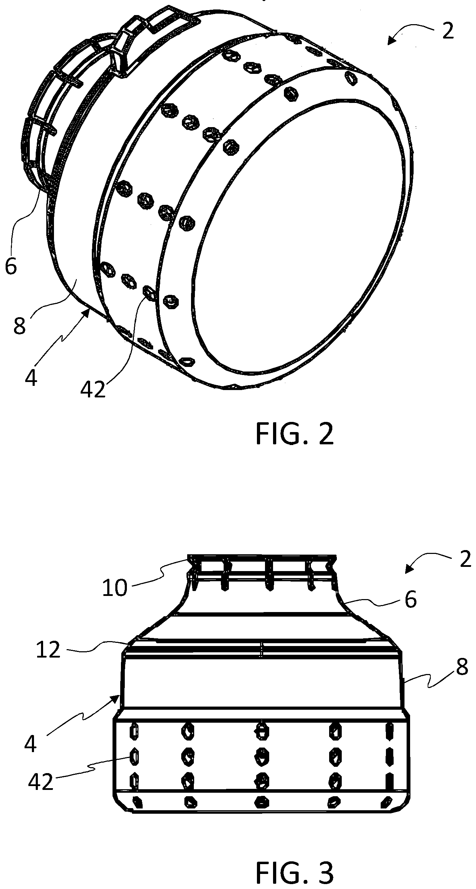

FIG. 2 illustrates an exhaust port 2 in a perspective view, in accordance with one example of this disclosure. FIG. 3 illustrates the exhaust port 2 of FIG. 2 in a side view. The exhaust port 2 may be used in connection with a pneumatic valve or an air valve of a vehicle, such as the vehicle 1 exemplified in FIG. 1, or any other suitable vehicle. The exhaust port 2 may suitably be used at an air drier or air processing unit of such a vehicle. As illustrated in FIGS. 2 and 3, the exhaust port 2 comprises an outer shell 4, which in turn comprises two shell portions. A first shell portion is in the form of a bell mouth, presenting an entry for air into the outer shell 4. This first shell portion may therefore also be referred to as a bell mouth shell portion 6. A second shell portion, which is provided adjacent to the bell mouth shell portion 6, is in the form of one or more cylindrical sections. The second shell portion may therefore be referred to as a cylindrical shell portion 8.

The bell mouth shell portion 6 may be configured to receive air from a pneumatic valve or an air valve. The bell mouth shell portion 6 has a narrow end 10 and a wide end 12 (as indicated in FIG. 3). When the exhaust port 2 is mounted to a vehicle, the narrow end 10 is intended to be located above the wide end 12, as shown in FIG. 3. The bell mouth shell portion 6 guides the received air from the narrow end 10 towards the wide end 12. The cylindrical shell portion 8 is located adjacent to the wide end 12 of the bell mouth shell portion 6.

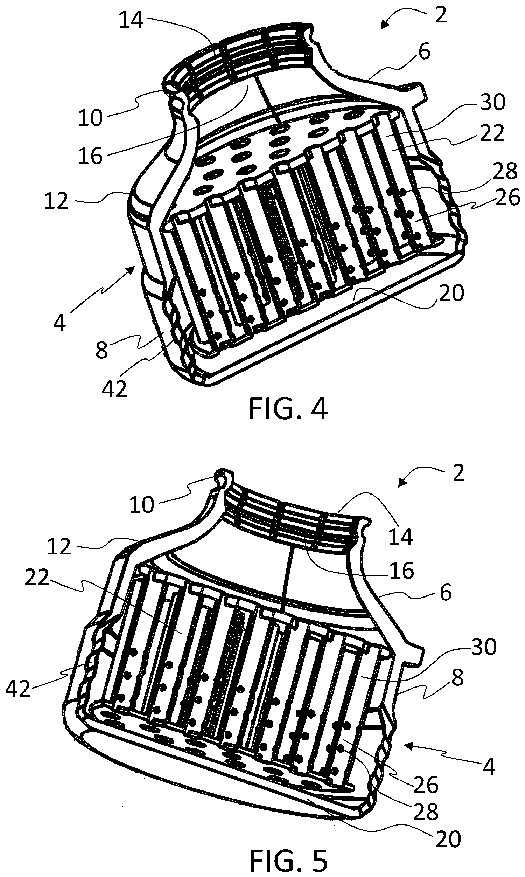

FIGS. 4-6 illustrate the exhaust port 2 of FIG. 2 in different cross-sectional views. As can be seen in FIGS. 4 and 5 the narrow end 10 of the exhaust port 2 is provided with an inlet opening 14 for allowing air to enter into the bell mouth shell portion 6. The narrow end 10 may also be provided with threads 16 for mounting the exhaust port 2 to a device, such as a pneumatic valve or air valve. The threads 16 are here illustrated as internal threads configured to mate with external threads of the device to which it is to be mounted. As the received air flows from the inlet opening 14 through the narrow end 10 towards the wide end 12, the risk of pressure fluctuations (and thus the risk of turbulence) is reduced since sudden expansion of the air is avoided by the configuration of the bell mouth shell portion 6. Since the risk of turbulence is reduced, the risk of the high noise from the exhaust port **2** is also reduced.

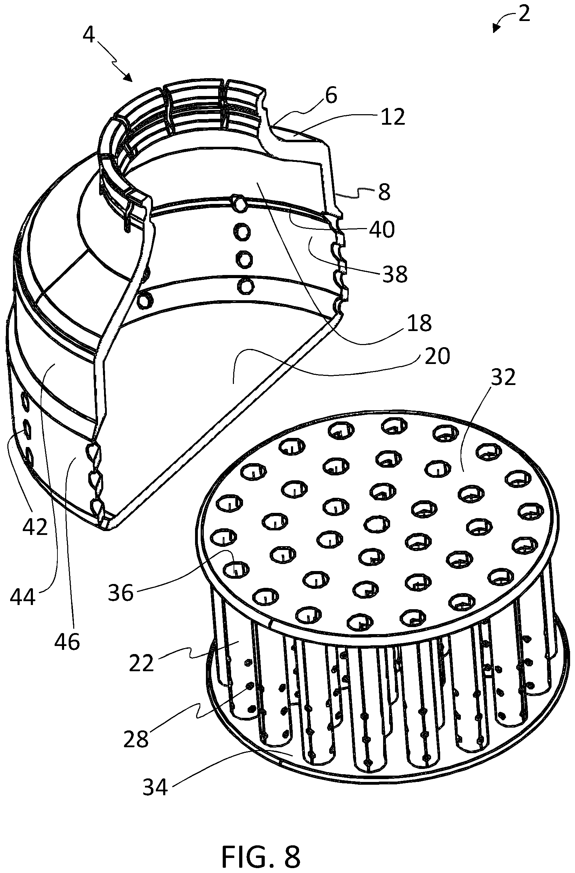

Turning now briefly to **FIG. 8**, for some further discussion of the cylindrical shell portion **8**. Here, the exhaust port **2** of **FIG. 2** is illustrated in an exploded view, and partly in cross-section. More specifically, the outer shell **4** is illustrated in cross-section. As can be seen in **FIG. 8**, the cylindrical shell portion **8**, which is located adjacent to the wide end **12** of the bell mouth shell portion **6**, comprises an open upper end **18** configured to receive air that has pass through the bell mouth shell portion **6**. The cylindrical shell portion **8** also comprises an opposite closed lower end **20**.

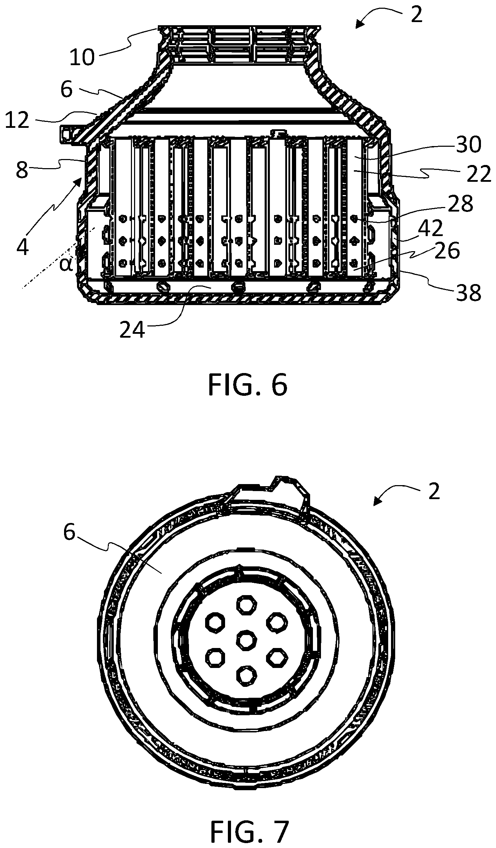

Turning back to **FIGS. 4-6**, within the outer shell **4**, the exhaust port **2** further comprises a plurality of elongated elements **22**. More specifically, the elongated elements **22** are contained with the cylindrical shell portion **8** and extend in an axial direction of the cylindrical shell portion **8**. In particular, the elongated elements **22** extend towards, but end before, the closed lower end **20** of the cylindrical shell portion **8**. As best seen, in **FIG. 6**, below the elongated elements **22**, i.e. between the elongated elements **22** and the closed lower end 20 of the cylindrical shell portion **8** there is a resonance chamber **24**.

The elongated elements **22** in **FIGS. 4-6** are illustrated as being tubular. Thus, in this example, the elongated elements **22** are in the form of tubes **22**. Thus, compressed air that has passed through the bell mouth shell portion **6** will enter through the upper end of each tube **22** and will exit through the lower end of each tube **22**. The elongated elements **22**, i.e. here in the form of tubes **22**, make any turbulent flow coming from the bell mouth shell portion **6** into a more laminar flow, thus having a noise reducing effect. The air that has exited through the lower end of the tubes **22** will enter into the resonance chamber **24**, which will generate destructive noise (reflection) interference and promote cancelation/-reduction of the noise level. As can be seen in **FIGS. 4-6**, a lower section **26** of each tube **22**, located nearest the closed lower end **20** of the cylindrical shell portion **8**, may be provided with perforations **28**. An upper section **30** of the perforated tubes **22**, located nearest the open upper end **18** of the cylindrical shell portion **8** (open upper end **18** is indicated in **FIG. 8**), may be void of such perforations, and instead present a substantially solid section. By omitting perforations in the upper section **30** of the tubes **22** an improved noise reducing effect may be achieved. In particular, when air from the bell mouth shell portion **6** enters the upper section **30** of the perforated tubes **22**, there will be turbulence (pressure fluctuation). The non-perforated upper section **30** of the tubes **22** will give a honeycomb effect and make the flow streamlined (laminar flow). In laminar flow, there will be less fluctuation in pressure, and less fluctuation in pressure results in less noise, in accordance with the following formula:

$$dB = 20 log \frac{P1}{P2}$$

where *dB* is Decibel (i.e. noise level), *P1* is amplitude pressure fluctuation, and *P2* is atmospheric pressure. Thus, less pressure fluctuation results in less noise.

The perforations **28** in the lower section **26** of the tubes **22** allow air that has entered through the upper section **30** to exit through the perforations **28** in the lower section **26**. This will contribute to noise reduction, as soundwaves exiting through the plurality of tubes **22** through the perforations **28** will interfere with each other and have a noise reducing effect. Thus, some of the air entering the tubes **22** will exit through the lower end of the tubes **22** into the resonance chamber **24**, while some of the air will exit through the perforations **28** in the lower section **26** of the tubes **22**. As mentioned previously and as can be seen in **FIGS. 4-6**, the upper section **30** of the plurality of perforated tubes **22** may suitably present an array in the form of a honeycomb chamber.

**FIG. 7** illustrates the exhaust port **2** of **FIG. 2** in a top view. Here the entries into the upper end of the tubes are visible when looking down through the bell mouth shell portion **6**.

**FIG. 8** illustrates the exhaust port **2** of **FIG. 2** in an exploded view, and partly in cross-section. More specifically, the outer shell **4** is illustrated in cross-section. As shown in **FIG. 8**, the exhaust port **2** may comprise an upper plate **32** and a lower plate **34**. Each plate **32, 34** may be provided with a plurality of holes **36**. Each tube **22** extends from a respective hole **36** of the upper plate **32** to a respective hole of the lower plate **34**. Thus, air may enter through the holes **36** of the upper plate **32,** pass through the tubes **22** and exit through the holes of the lower plate **34** and into the resonance chamber **24** (resonance chamber **24** shown in **FIG. 6**). At least one of the plates **32, 34** may be attached to the cylindrical shell portion **8**. The cylindrical shell portion **8** may be defined by a circumferential wall **38** extending from the open upper end **18** to the closed lower end **20**. For instance, there may be a groove **40** in the circumferential wall **38,** or there may be some other engagement elements, for engaging one or both plates **32, 34**. The plates **32, 34** and the tubes **22** may suitably be provided as an integral insert, which can be inserted into the outer shell **4** when assembling the exhaust port **2.**

As can be seen in the **FIGS. 2, 3, 4, 5, 6** and **8,** the circumferential wall **38** (indicated in **FIG. 8**) may be provided with downwardly inclined perforations **42** for expelling air downwardly to the environment. In particular, the downwardly inclined perforations **42** may have a direction of extension (and thus an expelling direction) which presents an angle α in the range of 30°-45° relative to the circumferential wall **38** (see **FIG. 6**). Thus, air that is present around the plurality of elongated elements **22** (i.e., in the illustrated example, air that has exited the tubes **22**) will be expelled through the downwardly inclined perforations **42** in the circumferential wall **38** of the cylindrical shell portion **8.** Due to the downwards inclination of these perforations **42,** the distance that any noise will travel before reaching a pedestrian and/or passenger, will be longer than if the air would have been expelled horizontally, i.e. substantially perpendicular to the circumferential wall **38.** As indicated in **FIG. 8,** the circumferential wall **38** has an upper area **44** bordering to the bell mouth shell portion **6,** and a lower area **46** spaced from the bell mouth shell portion **6.** Suitably, the lower area is provided with the downwardly inclined perforations **42** of the circumferential wall **38.** By not providing downwardly inclined perforations **42** in the upper area **44,** the risk of impacting other vehicle components located in the vicinity of the upper area **44** may be reduced. Furthermore, by substantially aligning the downwardly inclined perforations **42** with the perforations **28** in the tubes **22,** a more effective expelling of the air may be achieved.

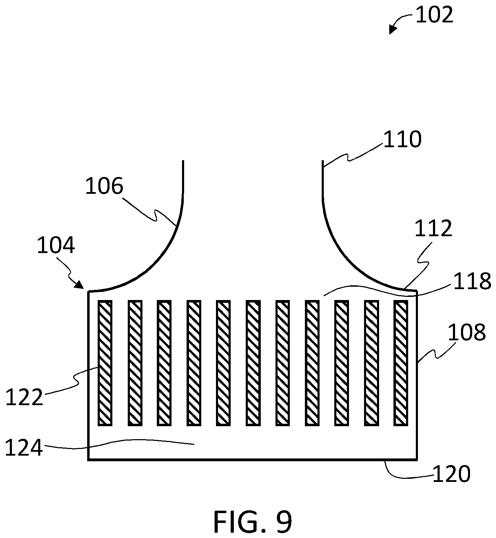

FIG. 9 illustrates very schematically another example of an exhaust port **102** of this disclosure. More specifically, a cross-section is illustrated schematically. **FIG. 9** illustrates an exhaust port **102** for a pneumatic valve or an air valve of a vehicle, such as at an air drier or air processing unit of a vehicle. The exhaust port **102** comprises an outer shell **104.** The outer shell **104** comprises a bell mouth shell portion **106** configured to receive air from said pneumatic valve or air valve, the bell mouth shell portion **106** having a narrow end **110** and a wide end **112,** wherein the bell mouth shell portion **106** guides the received air from the narrow end **110** towards the wide end **112.** The outer shell **104** also comprises a cylindrical shell portion **108** located adjacent to the wide end **112** of the bell mouth shell portion **106,** the cylindrical shell portion **108** comprising an open upper end **118** configured to receive air that has passed through the bell mouth shell portion **106,** and an opposite closed lower end **120.** The exhaust port **102** further comprises a plurality of elongated elements **122** contained within the cylindrical shell portion **108** and extending in an axial direction of the cylindrical shell portion **108** towards, but ending before, the closed lower end **120,** thereby presenting a resonance chamber **124** between the closed lower end **120** and said elongated elements **122.** Although not specifically shown in the schematic view in **FIG. 9,** the exhaust port **102** may have one or more openings for expelling the air to the environment.

Example 1: An exhaust port for a pneumatic valve or an air valve of a vehicle, such as at an air drier or air processing unit of a vehicle, comprising:

- an outer shell, the outer shell comprising

  a bell mouth shell portion configured to receive air from said pneumatic valve or air valve, the bell mouth shell portion having a narrow end and a wide end, wherein the bell mouth shell portion guides the received air from the narrow end towards the wide end,

  a cylindrical shell portion located adjacent to the wide end of the bell mouth shell portion, the cylindrical shell portion comprising an open upper end configured to receive air that has passed through the bell mouth shell portion, and an opposite closed lower end,

- a plurality of elongated elements contained within the cylindrical shell portion and extending in an axial direction of the cylindrical shell portion towards, but ending before, the closed lower end, thereby presenting a resonance chamber between the closed lower end and said elongated elements.

Example 2: The exhaust port of example 1, wherein said plurality of elongated elements is in the form of a plurality of perforated tubes.

Example 3: The exhaust port of example 2, wherein each perforated tube has:

- an upper section located nearest the open upper end of the cylindrical shell portion, and
- a lower section located nearest the closed lower end of the cylindrical shell portion, wherein the lower section is provided with perforations allowing air that has entered through the upper section to exit through the perforations in the lower section.

Example 4: The exhaust port of example 3, wherein the upper section is void of perforations.

Example 5: The exhaust port of example 4, wherein the upper sections of said plurality of perforated tubes present an array in the form of a honeycomb chamber.

Example 6: The exhaust port of any of examples 2-5, further comprising an upper plate and a lower plate, each plate being provided with a plurality of holes and at least one of the plates being attached to the cylindrical shell portion, wherein each tube extends from a respective hole of the upper plate to a respective hole of the lower plate.

Example 7: The exhaust port of any of examples 1-6, wherein the cylindrical shell portion is defined by a circumferential wall extending from the open upper end to the closed lower end, wherein the circumferential wall is provided with downwardly inclined perforations for expelling air downwardly to the environment.

Example 8: The exhaust port of example 7, wherein the direction of extension of the downwardly inclined perforations, and thus the expelling direction, presents an angle in the range of 30°-45° relative to the circumferential wall.

Example 9: The exhaust port of any of examples 7-8, wherein the circumferential wall has:

- an upper area bordering to the bell mouth shell portion, and
- a lower area spaced from the bell mouth shell portion,

wherein the lower area is provided with said downwardly inclined perforations of the circumferential wall.

Example 10: A vehicle comprising the exhaust port according to any of examples 1-9.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An exhaust port for a pneumatic valve or an air valve of a vehicle, such as at an air drier or air processing unit of a vehicle, comprising:

   - an outer shell, the outer shell comprising

     a bell mouth shell portion configured to receive air from said pneumatic valve or air valve, the bell mouth shell portion having a narrow end and a wide end, wherein the bell mouth shell portion guides the received air from the narrow end towards the wide end, a cylindrical shell portion located adjacent to the wide end of the bell mouth shell portion, the cylindrical shell portion comprising an open upper end configured to receive air that has passed through the bell mouth shell portion, and an opposite closed lower end,

   - a plurality of elongated elements contained within the cylindrical shell portion and extending in an axial direction of the cylindrical shell portion towards, but ending before, the closed lower end, thereby presenting a resonance chamber between the closed lower end and said elongated elements.

2. The exhaust port of claim 1, wherein said plurality of elongated elements is in the form of a plurality of perforated tubes.

3. The exhaust port of claim 2, wherein each perforated tube has:

   - an upper section located nearest the open upper end of the cylindrical shell portion, and
   - a lower section located nearest the closed lower end of the cylindrical shell portion, wherein the lower section is provided with perforations allowing air that has entered through the upper section to exit through the perforations in the lower section.

4. The exhaust port of claim 3, wherein the upper section is void of perforations.

5. The exhaust port of claim 4, wherein the upper sections of said plurality of perforated tubes present an array in the form of a honeycomb chamber.

6. The exhaust port of any of claims 2-5, further comprising an upper plate and a lower plate, each plate being provided with a plurality of holes and at least one of the plates being attached to the cylindrical shell portion, wherein each tube extends from a respective hole of the upper plate to a respective hole of the lower plate.

7. The exhaust port of any of claims 1-6, wherein the cylindrical shell portion is defined by a circumferential wall extending from the open upper end to the closed lower end, wherein the circumferential wall is provided with downwardly inclined perforations for expelling air downwardly to the environment.

8. The exhaust port of claim 7, wherein the direction of extension of the downwardly inclined perforations, and thus the expelling direction, presents an angle in the range of 30°-45° relative to the circumferential wall.

9. The exhaust port of any of claims 7-8, wherein the circumferential wall has:

      - an upper area bordering to the bell mouth shell portion, and
      - a lower area spaced from the bell mouth shell portion,

   wherein the lower area is provided with said downwardly inclined perforations of the circumferential wall.

10. A vehicle comprising the exhaust port according to any of claims 1-9.

FIG. 1

FIG. 2

FIG. 3

FIG. 4

FIG. 5

10

6

12

8

4

α

2

30

22

28

42

26

38

24

## FIG. 6

6

2

## FIG. 7

FIG. 8

FIG. 9

**EUROPEAN SEARCH REPORT**

Application Number

EP 24 15 8261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/118577 A2 (KNORR BREMSE SYSTEME FUER NUTZFAHRZEUGE GMBH [DE]) 13 July 2017 (2017-07-13) | 1,7-10 | INV. B60T17/00 B01D53/26 |
| A | * page 7, lines 5-10; page 9, lines 9-20; claim 1; figure 1 * | 2-6 | F15B21/00 G10K11/172 |
| A | EP 3 322 622 B1 (KNORR BREMSE SYSTEME FUER NUTZFAHRZEUGE GMBH [DE]) 24 April 2019 (2019-04-24) * figure 2 * | 1-10 | |
| A | DE 10 2013 013281 A1 (KNORR BREMSE SYSTEME FUER NUTZFAHRZEUGE GMBH [DE]) 12 February 2015 (2015-02-12) * figure 1 * | 1-10 | |
| A | EP 0 530 019 B1 (KNORR BREMSE SYSTEME [GB]) 15 January 1997 (1997-01-15) * figure 1A * | 1-10 | |
| A | WO 2019/063350 A1 (KNORR BREMSE SYSTEME FUER NUTZFAHRZEUGE GMBH [DE]) 4 April 2019 (2019-04-04) * figure 1 * | 1-10 | TECHNICAL FIELDS SEARCHED (IPC) B60T B01D F15D F15B G10K |

The present search report has been drawn up for all claims

| Place of search | Date of completion of the search | Examiner |
|---|---|---|
| Munich | 16 July 2024 | Lopez, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 8261

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2024

| Patent document cited in search report | | Publication date | Patent family member(s) | | Publication date |
|---|---|---|---|---|---|
| WO 2017118577 | A2 | 13-07-2017 | CN | 108883760 A | 23-11-2018 |
| | | | DE | 102016100140 A1 | 06-07-2017 |
| | | | EP | 3400155 A2 | 14-11-2018 |
| | | | RU | 2702280 C1 | 07-10-2019 |
| | | | WO | 2017118577 A2 | 13-07-2017 |
| EP 3322622 | B1 | 24-04-2019 | BR | 112018000559 A2 | 11-09-2018 |
| | | | CN | 108025730 A | 11-05-2018 |
| | | | DE | 102015111515 A1 | 19-01-2017 |
| | | | EP | 3322622 A1 | 23-05-2018 |
| | | | TR | 201909790 T4 | 22-07-2019 |
| | | | WO | 2017009443 A1 | 19-01-2017 |
| DE 102013013281 | A1 | 12-02-2015 | DE | 102013013281 A1 | 12-02-2015 |
| | | | WO | 2015018530 A2 | 12-02-2015 |
| EP 0530019 | B1 | 15-01-1997 | DE | 69216721 T2 | 12-06-1997 |
| | | | EP | 0530019 A2 | 03-03-1993 |
| | | | ES | 2096043 T3 | 01-03-1997 |
| WO 2019063350 | A1 | 04-04-2019 | CN | 111132880 A | 08-05-2020 |
| | | | DE | 102017122215 A1 | 28-03-2019 |
| | | | EP | 3687872 A1 | 05-08-2020 |
| | | | JP | 6991344 B2 | 12-01-2022 |
| | | | JP | 2020535073 A | 03-12-2020 |
| | | | US | 2020269827 A1 | 27-08-2020 |
| | | | WO | 2019063350 A1 | 04-04-2019 |

EPO FORM P0459

For more details about this annex : see Official Journal of the European Patent Office, No. 12/82